# EUROPÄISCHE PATENTSCHRIFT

(11) **EP 3 569 110 B1**
(45) Veröffentlichungstag und Bekanntmachung des Hinweises auf die Patenterteilung: **25.11.2020**
(21) Anmeldenummer: 19174064.6
(22) Anmeldetag: 13.05.2019
(51) Int. Cl.: A47G 7/04, A01G 9/02, E04F 13/00

(54) **BLUMENKASTEN**
FLOWER BOX
BAC À FLEURS

(30) Priorität: 16.05.2018 DE 202018102729 U
(43) Veröffentlichungstag der Anmeldung: 20.11.2019
(73) Patentinhaber: Geli GmbH, 63755 Alzenau-Michelbach (DE)
(72) Erfinder: LIPPERT, Thomas, 63755 Alzenau- Michelbach (DE)
(74) Vertreter: Keil & Schaafhausen Patentanwälte PartGmbB

(56) Entgegenhaltungen:
- EP-A1- 0 820 937
- CN-U- 202 396 214
- US-A1- 2011 084 088
- US-A1- 2016 021 831

## Beschreibung

Die Erfindung betrifft einen Blumenkasten, insbesondere zur Befestigung in einer Palette, mit vier Seitenwänden und einem Boden.

Grundsätzlich ist es bekannt, Paletten, insbesondere Holzpaletten, z.B. sogenannte Europaletten oder Europoolpaletten, auch als Möbelstücke oder zur Gestaltung von Garten- oder Balkonbepflanzungen einzusetzen. So ist beispielsweise aus der DE 20 2016 007 000 U1 ein Hochbeet bekannt, das aus vier solcher Europaletten hergestellt werden kann. Zudem ist es bekannt, derartige Europaletten als Stützstruktur zum Aufstellen von Blumenkästen zu verwenden, wobei die aus Blech bestehenden Blumenkästen bei einer hochkant stehenden Palette in die Freiräume zwischen den Bodenbrettern, Deckbrettern und Abstandsklötzen eingesetzt werden können.

Bei einem bekannten Blech-Blumenkasten können zwei einander gegenüberliegende Seitenwände auf ihrer dem Boden abgewandten Seite jeweils einen nach außen gerichteten Flansch aufweisen, der sich zumindest im Wesentlichen parallel zu dem Boden erstreckt. Bei länglichen Blumenkästen erstreckt sich dieser Flansch z.B. jeweils an den Längsseiten. Der Flansch dient dazu, den Blumenkasten in dem Freiraum zwischen den Bodenbrettern, Deckbrettern und Abstandsklötzen der Palette zu halten, indem ein Flansch auf einem Bodenbrett und ein Flansch auf einem Deckbrett der Palette aufliegt.

Nachteilig an den bekannten Blumenkästen zur Verwendung mit Paletten ist, dass meist nur zwei dieser Blech-Blumenkästen senkrecht von oben in die beiden Freiräume auf der Oberseite der Palette eingesetzt werden können. Für eine ansprechende Gestaltung ist es jedoch wünschenswert, mehr Blumenkästen in oder an einer Palette zu befestigen. Das Einsetzen der bekannten Blech-Blumenkästen in die beiden mittleren und unteren Freiräume der Palette ist meist allenfalls sehr mühsam möglich.

Aus dem Stand der Technik bekannte Blumenkästen werden in der US 2016/021831 A1 und der US 2011/084088 A1 offenbart, wobei die Blumenkästen über lösbare Stecksysteme untereinander verbunden und über Aufhängmechanismen an anderen Bauteilen befestigt werden können.

Aus der EP 0 820 937 A1 ist zudem ein Behältersystem für Paletten bekannt, das die transportgerechte Verbindung von Behältern untereinander erlaubt. Aufgabe der vorliegenden Erfindung ist es demgegenüber einen Blumenkasten bereitzustellen, von dem mehrere, insbesondere auch mehr als sechs Blumenkästen, in bzw. an einer Europalette befestigbar sind.

Diese Aufgabe wird erfindungsgemäß im Wesentlichen dadurch gelöst, dass wenigstens ein Flansch mit zumindest einer schlitzförmigen Durchgangsöffnung versehen ist, und dass wenigstens ein Flansch mit wenigstens einer an die schlitzförmige Durchgangsöffnung angepassten Verriegelungszunge versehen ist. Hierdurch ist es möglich, an einem in einer Palette in dem Freiraum zwischen den Bodenbrettern, den Deckbrettern und den Abstandsklötzen aufgenommenen Blumenkasten wenigstens einen weiteren Blumenkasten zu fixieren, indem die wenigstens eine Verriegelungszunge in die wenigstens eine schlitzförmige Durchgangsöffnung des in der Palette aufgenommenen Blumenkastens eingehängt wird. Mit anderen Worten können ein weiterer Blumenkasten oder auch mehrere weitere Blumenkästen, z.B. parallel zu einem in der Palette aufgenommenen Blumenkasten, vorgehängt werden.

Dieses Grundprinzip der aneinander mittels Verriegelungszunge und schlitzförmiger Durchgangsöffnung befestigbaren Blumenkästen kann auch unabhängig von Paletten Anwendung finden, beispielsweise bei Befestigung der Blumenkästen einem Balkongeländer. So ist es beispielsweise möglich, zwei Blumenkästen jeweils mit einem Flansch auf dem Handlauf das Geländers aufzusetzen, wobei die beiden Blumenkästen aneinander mittels Verriegelungszunge und schlitzförmige Durchgangsöffnung fixiert sind.

Nach einer bevorzugten Ausführungsform erstreckt sich die zumindest eine schlitzförmige Durchgangsöffnung parallel zu der Seitenwand, in deren Flansch die schlitzförmige Durchgangsöffnung vorgesehen ist. Entsprechend kann sich die zumindest eine Verriegelungszunge auch parallel zu der Seitenwand erstrecken, in deren Flansch die Verriegelungszunge vorgesehen ist. Hierdurch ist es möglich, dass sich die Verriegelungszungen jeweils an der Seitenwand des anderen Blumenkastens abstützen, wenn zwei Blumenkästen miteinander verbunden sind. Somit sind die Blumenkästen nicht nur innerhalb der durch den jeweiligen Flansch definierten Ebene nicht zueinander verschiebbar gehalten, sondern können auch nicht wesentlich relativ zueinander verschwenkt werden.

Wenn die zumindest eine schlitzförmige Durchgangsöffnung im Wesentlichen angrenzend an die Seitenwand angeordnet ist, in deren Flansch die schlitzförmige Durchgangsöffnung vorgesehen ist, wird ein solches Verschwenken der aneinander befestigten Blumenkästen zueinander wirksamer verhindert. Entsprechend kann auch die zumindest eine Verriegelungszunge an dem der Seitenwand, in deren Flansch die Verriegelungszunge vorgesehen ist, abgewandten Kante des Flanschs angeordnet sein.

Um bei länglichen Blumenkästen ein wirksames Abstützen mittels der Verriegelungszungen zu erreichen, wäre es eigentlich zu bevorzugen, wenn sich die Verriegelungszungen jeweils über die gesamte Länge des Blumenkastens erstrecken würden. Dies würde jedoch durch entsprechend große Durchgangsöffnungen den Flansch übermäßig schwächen. Es wird daher bevorzugt, wenn insbesondere bei länglichen Blumenkästen wenigstens ein Flansch mit mehreren voneinander beabstandeten und miteinander fluchtenden schlitzförmigen Durchgangsöffnungen versehen ist, wobei wenigstens ein Flansch mit mehreren voneinander beabstandeten und miteinander fluchtenden Verriegelungszungen versehen ist. Bei Verwendung einer Europalette, bei der die Freiräume zwischen den Bodenbrettern, Deckbrettern und Abstandsklötzen z.B. etwa 38,25 cm lang und etwa 7,8 cm breit sind, wird für einen den gesamten Freiraum ausfüllenden Blumenkasten beispielsweise eine Gestaltung mit drei bis fünf, z.B. vier, schlitzförmigen Durchgangsöffnungen an einem Flansch und entsprechend drei bis fünf, z.B. vier, Verriegelungszungen an einem Flansch bevorzugt.

Um die Blumenkästen platzsparend ineinander stapeln zu können und das Einsetzen in den Freiraum einer Palette zu erleichtern, können wenigstens zwei einander gegenüberliegende Seitenwände derart geneigt verlaufen, dass sich der Innenraum des Blumenkastens von der mit dem Flansch versehenen Kante zum Boden hin, z.B. konisch, verjüngt.

Das Einsetzen eines Blumenkastens in den Freiraum einer Palette kann unabhängig davon und unabhängig von der Verwendung von schlitzförmigen Durchgangsöffnungen und Verriegelungszungen auch dadurch erleichtert werden, dass wenigstens eine Seitenwand über eine Fase und/oder einen abgekanteten Bereich mit dem Boden verbunden ist. Insbesondere ist die Fase und/oder der abgekantete Bereich beispielsweise an einer mit einem Flansch versehenen Seitenwand vorgesehen.

Es wird bevorzugt, wenn wenigstens eine der Seitenwände mit einer Versteifungsprofilierung versehen ist. Zweckmäßigerweise kann die Versteifungsprofilierung einen mit dem Boden verbundenen Steg und/oder eine Griffmulde aufweisen. Alternativ oder zusätzlich hierzu ist es auch möglich, Versteifungsrippen in einer oder mehrerer der Seitenwände und/oder in den Boden vorzusehen. Der Boden kann zudem mit einem kegelstumpfförmigen Vorsprung versehen sein, der mit wenigstens einer Durchgangsöffnung versehen ist oder werden kann, um einen Wasserablauf zu bilden.

Bei einem in einer Europalette zu verwendenden Blumenkasten können die beiden mit einem Flansch versehenen Seitenwände länger als die angrenzenden, nicht mit einem Flansch versehenen Seitenwände sein, beispielsweise etwa 38 cm, wobei die nicht mit einem Flansch versehenen Seitenwände entsprechend etwa 7,8 cm lang sein können. Alternativ hierzu ist es auch möglich, dass der Blumenkasten, z.B. bei Verwendung in einer Europalette, deutlich kürzer als der Freiraum in der Palette ist, so dass die Seitenwände alle im Wesentlichen die gleiche Länge von z.B. etwa 7,8 cm aufweisen.

Im Gegensatz zu den bekannten Blech-Blumenkästen ist ein erfindungsgemäßer Blumenkasten vorzugsweise als ein einstückiges Kunststoff-Formteil ausgebildet. Auf diese Weise lassen sich die Blumenkästen in großer Stückzahl vergleichsweise günstig herstellen. Zudem bietet dies den Vorteil, dass beispielsweise die Abmessungen, wie die Dicke der Verriegelungszungen, ohne zusätzlichen Aufwand an die mechanischen Anforderungen angepasst werden können.

Die Erfindung wird nachfolgend unter Bezugnahme auf Ausführungsbeispiele und die Figuren näher erläutert. Es zeigen schematisch:
- Figur 1: in Perspektivansicht einen Blumenkasten nach einer ersten Ausführungsform,
- Figur 2: eine Draufsicht auf den Blumenkasten nach Figur 1,
- Figur 3: eine unter Ansicht des Blumenkastens nach Figur 1,
- Figur 4: eine Seitenansicht des Blumenkastens nach Figur 1,
- Figur 5: in Perspektivansicht einen Blumenkasten nach einer zweiten Ausführungsform,
- Figur 6: in Seitenansicht den Blumenkasten nach Figur 5, und
- Figur 7: in Perspektivansicht mehrere an einer Palette befestigte Blumenkästen nach Figuren 1 und 5.

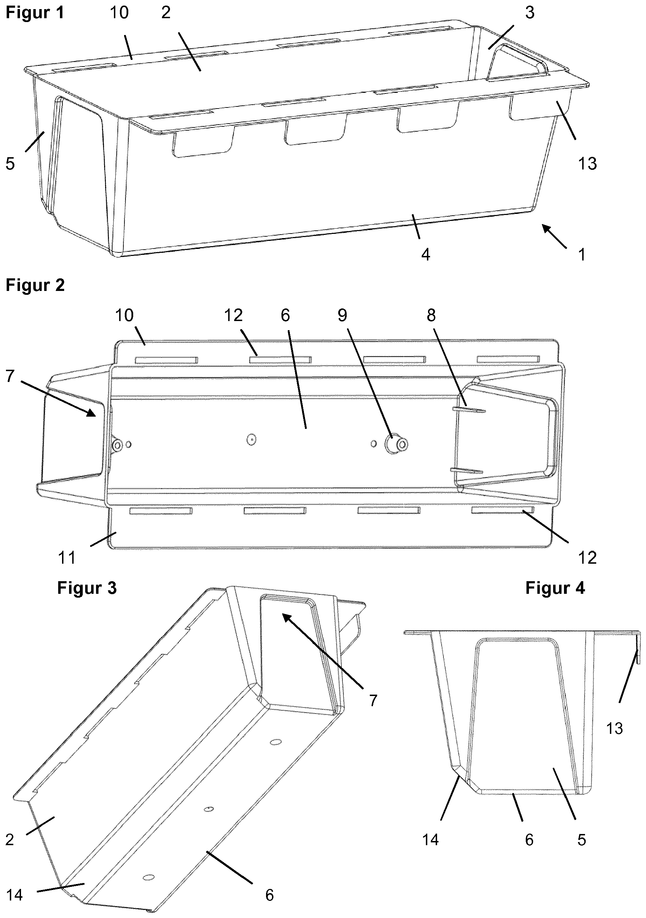

Der in den Figuren 1 bis 4 gezeigte Blumenkasten 1 weist vier Seitenwände 2, 3, 4, 5 sowie einen mit diesen verbundenen Boden 6 auf, die zusammen einen Innenraum begrenzen, in welchem Pflanzen und Erde aufgenommen werden kann. In der dargestellten Ausführungsform verläuft beispielsweise die Seitenwand 2 gegenüber der Seitenwand 4 geneigt, so dass sich der Innenraum in Richtung zu dem Boden 6 konisch verjüngt. Auch die Seitenwände 3, 5 können zueinander geneigt sein.

In dem in den Figuren gezeigten Ausführungsbeispiel sind die Seitenwände 3, 5 jeweils mit einer eine Griffmulde 7 bildenden Profilierung versehen, die die Handhabung des Blumenkastens 1 erleichtern und zudem auch die Seitenwände 3, 5 versteifen. Zusätzlich sind zwischen den Seitenwänden 3, 5 und dem Boden 6 Stege im Innenraum vorgesehen, die den Blumenkasten 1 weiter versteifen.

Der Boden 6 ist in dem gezeigten Beispiel mit zwei Wasserauslässen 9 versehen, die durch kegelstumpfförmige Vorsprünge mit jeweils einer Durchgangsöffnung gebildet sind. Die Wasserauslässe 9 können zunächst auch ohne Durchgangsöffnung ausgebildet sein, so dass diese bei Bedarf nachträglich von einem Benutzer vorgesehen werden können.

Die beiden längeren Seitenwände 2, 4 des Blumenkastens 1 sind jeweils mit einem Flansch 10, 11 versehen, der auf der dem Boden 6 abgewandten Seite näherungsweise rechtwinklig, d.h. im Wesentlichen parallel zu dem Boden 6, von der jeweiligen Seitenwand 2, 4 weg ragt. In dem dargestellten Ausführungsbeispiel ist der Flansch 10 kleiner als der Flansch 11 ausgebildet, d.h. der Flansch 10 steht weniger weit von der Seitenwand 2 vor.

Sowohl in dem Flansch 10 als auch in dem Flansch 11 sind jeweils vier schlitzförmige Durchgangsöffnungen 12 vorgesehen, die im Wesentlichen unmittelbar an die jeweilige Seitenwand 2, 4 angrenzend zueinander Flucht und hintereinander und voneinander beanstandet angeordnet sind. Weiter sind an dem Flansch 11 vier Verriegelungszungen 13 vorgesehen, die sich an der freien Längskante, d.h. auf der der Seitenwand 4 abgewandten Seite, im Wesentlichen rechtwinklig zu dem Flansch 11 erstrecken.

Die Position der Verriegelungszungen 13 ist dabei so gewählt, dass sie an die Position der Durchgangsöffnungen 12 angepasst ist, so dass die Verriegelungszungen 13 eines Blumenkastens 1 in die Durchgangsöffnungen 12 eines anderen Blumenkastens 1 einsteckbar sind, wenn die beiden Flansch 10, 11 übereinander liegen. Der Flansch 10 ist dabei im Wesentlichen um die Dicke der Verriegelungszungen 13 kleiner als der Flansch 11, so dass der Flansch 10 in den Spalt zwischen der Seitenwand 4 und den Verriegelungszungen 13 passt.

Mittels der Verriegelungszungen 13 und der schlitzförmigen Durchgangsöffnungen 12 können zwei baugleiche Blumenkästen 1 durch Einstecken der Verriegelungslaschen 13 eines Blumenkastens 1 in die Durchgangsöffnungen 12 eines anderen Blumenkastens 1 miteinander so verbunden werden, dass sich die Verriegelungslaschen 13 an der Seitenwand 2 abstützen kann. Dies verhindert im Wesentlichen ein Verschwenken der Blumenkästen 1 zueinander.

Abweichend von der dargestellten Ausführungsform ist es grundsätzlich auch möglich, dass beide Flansche 10, 11 mit Verriegelungszungen 13 versehen sind und/oder dass nur ein Flansch mit wenigstens einer schlitzförmigen Durchgangsöffnung 12 versehen ist.

Wie insbesondere aus den Figuren 3 und 4 ersichtlich ist, ist der Übergangsbereich zwischen der Seitenwand 2 und dem Boden 6 mit einer Fase bzw. einem abgekanteten Bereich 14 versehen, der etwa in einem Winkel von 45° zu der Seitenwand 2 und dem Boden 6 verläuft. Dies erleichtert es, den Blumenkasten 1 schräg in den Freiraum einer Palette einzusetzen.

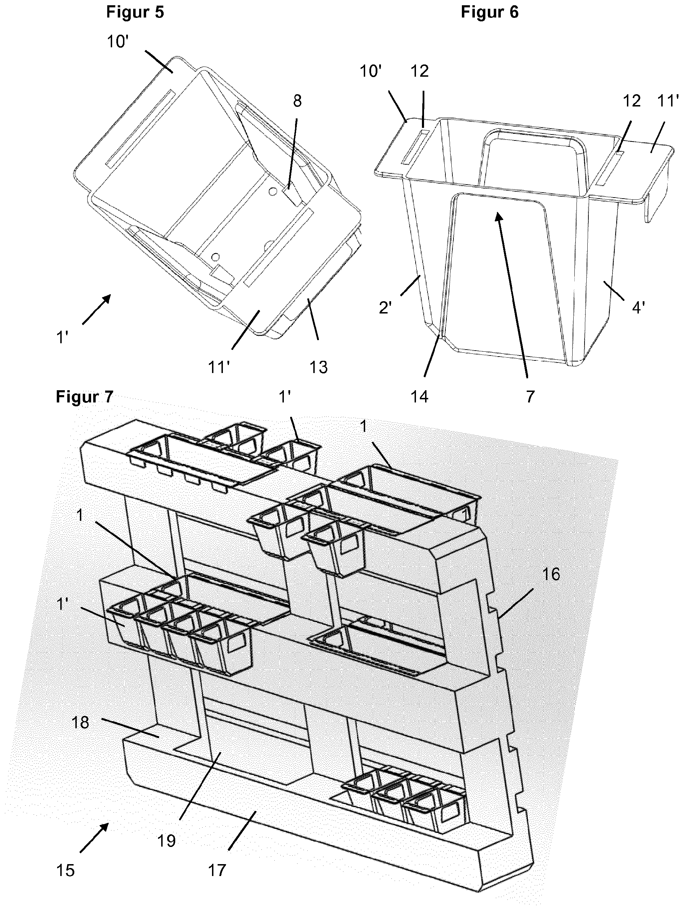

In den Figuren 5 und 6 ist eine weitere Ausführungsform eines erfindungsgemäßen Blumenkastens 1' dargestellt. Der Blumenkasten 1' weist in Richtung der Seitenwände 2', 4' eine geringere Länge auf. Entsprechend sind auch der Flansch 10' und der Flansch 11' kürzer ausgebildet und nur mit einer schlitzförmigen Durchgangsöffnung 12 und nur mit einer Verriegelungszunge 13 versehen. Ein Vergleich der beiden Ausführungsbeispiele zeigt, dass sowohl die Größe des Blumenkastens als auch die Anzahl der schlitzförmigen Durchgangsöffnungen 12 und der Verriegelungszungen 13 variiert werden kann.

In Figur 7 ist die Verwendung mehrerer Blumenkästen 1 in einer sogenannten Europalette 15 dargestellt. Die Palette 15 ist in an sich bekannter Art mit mehreren Deckbrettern 16 versehen, die mit drei Bodenbrettern 17 über Abstandsklötze 18 verbunden sind. Auf diese Weise werden zwischen den Deckbrettern 16, den Bodenbrettern 17 und den Abstandsklötzen 18 insgesamt sechs längliche Freiräume 19 gebildet, in die jeweils einen Blumenkasten 1 bzw. mehrere kleinere Blumenkästen 1' eingesetzt werden können.

Die Fase bzw. der abgekantete Bereich 14 sowie die zueinander leicht schräg verlaufenden Seitenwände 2, 4 erleichtern dabei das Einsetzen der Blumenkästen in die Palette 15, auch wenn die Blumenkästen leicht schräg gestellt sind. Wenn die Blumenkästen in die Palette 15 eingesetzt sind, umgreifen die Verriegelungszungen 13 beispielsweise die Deckbretter 16 bzw. die Bodenbretter 17.

Weiter ist in Figur 7 gezeigt, wie mehrere Blumenkästen 1, 1' aneinander befestigt werden können, so dass sich einer der Blumenkästen 1 außerhalb der Palette 15 befindet (rechts oben in Figur 7) sowie mehrere kleinere Blumenkästen 1' außerhalb der Palette 15 angeordnet sind.

Hierzu wird beispielsweise zunächst der außerhalb der Palette 15 anzubringende Blumenkasten 1 angrenzend an einen der Freiräume 19 mit seinem Flansch 11 auf eines der Bodenbretter 17 aufgesetzt, so dass die Verriegelungszungen 13 das Bodenbrett 17 hintergreifen. Anschließend wird ein zweiter Blumenkasten 1, 1' in den entsprechenden Freiraum 19 eingesetzt. Hierbei werden die Verriegelungszungen 13 des zweiten Blumenkastens 1, 1' in die schlitzförmigen Durchgangsöffnungen 12 des anderen Blumenkastens 1, 1' gesteckt. Auf diese Weise werden die beiden Blumenkästen 1, 1' aneinander und an der Palette 15 befestigt.

Abweichend von der in Figur 7 gezeigten Anordnung können auch mehr als zwei Blumenkästen 1, 1' nebeneinander angeordnet werden. Zudem ist es auch möglich, zwei oder mehr Blumenkästen unabhängig von einer Palette 15 nebeneinander anzuordnen und aneinander zu befestigen.

### Bezugsziffern:

- 1, 1': Blumenkasten
- 2, 2': Seitenwand
- 3: Seitenwand
- 4, 4': Seitenwand
- 5: Seitenwand
- 6: Boden
- 7: Griffmulde
- 8: Steg
- 9: Wasserauslass
- 10, 10': Flansch
- 11, 11': Flansch
- 12: schlitzförmige Durchgangsöffnung
- 13: Verriegelungszunge
- 14: Fase (abgekanteter Bereich)
- 15: Palette
- 16: Deckbrett
- 17: Bodenbrett
- 18: Abstandsklotz
- 19: Freiraum

## Patentansprüche

1. Blumenkasten, zur Befestigung in einem Freiraum (19) zwischen Bodenbrettern (17), Deckbrettern (16) und Abstandsklötzen (18) einer Palette (15), mit vier Seitenwänden (2, 2'; 3; 4, 4'; 5) und einem Boden (6), wobei zwei einander gegenüberliegende Seitenwände (2, 2'; 4, 4') auf ihrer dem Boden (6) abgewandten Seite jeweils einen nach außen gerichteten Flansch (10, 10'; 11, 11') aufweisen, der sich zumindest im Wesentlichen parallel zu dem Boden (6) erstreckt, **dadurch gekennzeichnet, dass** wenigstens ein Flansch (10, 10'; 11, 11') mit zumindest einer schlitzförmigen Durchgangsöffnung (12) versehen ist, und dass wenigstens ein Flansch (10, 10'; 11, 11') mit wenigstens einer an die schlitzförmige Durchgangsöffnung (12) angepassten Verriegelungszunge (13) versehen ist, und dass ein Flansch (10, 10'; 11, 11') auf dem Bodenbrett (17) und ein Flansch (10, 10'; 11, 11') auf dem Deckbrett (16) der Palette (4) aufliegt, wenn der Blumenkasten in dem Freiraum (19) befestigt ist.

2. Blumenkasten nach Anspruch 1, **dadurch gekennzeichnet, dass** sich die zumindest eine schlitzförmige Durchgangsöffnung (12) parallel zu der Seitenwand (2, 2'; 4, 4') erstreckt, in deren Flansch (10, 10'; 11, 11') die schlitzförmige Durchgangsöffnung (12) vorgesehen ist.

3. Blumenkasten nach Anspruch 1 oder 2, **dadurch gekennzeichnet, dass** die zumindest eine schlitzförmige Durchgangsöffnung (12) im Wesentlichen angrenzend an die Seitenwand (2, 2'; 4, 4') angeordnet ist, in deren Flansch (10, 10'; 11, 11') die schlitzförmige Durchgangsöffnung (12) vorgesehen ist.

4. Blumenkasten nach einem der vorhergehenden Ansprüche, **dadurch gekennzeichnet, dass** sich die zumindest eine Verriegelungszunge (13) parallel zu der Seitenwand (2, 2'; 4, 4') erstreckt, in deren Flansch (10, 10'; 11, 11') die Verriegelungszunge (13) vorgesehen ist.

5. Blumenkasten nach einem der vorhergehenden Ansprüche, **dadurch gekennzeichnet, dass** die zumindest eine Verriegelungszunge (13) an dem der Seitenwand (2, 2'; 4, 4'), in deren Flansch (10, 10'; 11, 11') die Verriegelungszunge (13) vorgesehen ist, abgewandten Kante des Flanschs angeordnet ist.

6. Blumenkasten nach einem der vorhergehenden Ansprüche, **dadurch gekennzeichnet, dass** wenigstens ein Flansch (10, 10'; 11, 11') mit mehreren voneinander beabstandeten und miteinander fluchtenden schlitzförmigen Durchgangsöffnungen (12) versehen ist, und dass wenigstens ein Flansch (10, 10'; 11, 11') mit mehreren voneinander beabstandeten und miteinander fluchtenden Verriegelungszungen (13) versehen ist.

7. Blumenkasten nach einem der vorhergehenden Ansprüche, **dadurch gekennzeichnet, dass** wenigstens zwei einander gegenüberliegende Seitenwände (2, 2'; 3; 4, 4'; 5) derart geneigt verlaufen, dass sich der Innenraum des Blumenkastens von der mit dem Flansch (10, 10'; 11, 11') versehenen Kante zum Boden (6) hin konisch verjüngt.

8. Blumenkasten, insbesondere nach einem der vorhergehenden Ansprüche, mit vier Seitenwänden und einem Boden, **dadurch gekennzeichnet, dass** wenigstens eine Seitenwand (2, 2') über eine Fase (14) und/oder einen abgekanteten Bereich mit dem Boden (6) verbunden ist.

9. Blumenkasten nach Anspruch 8, **dadurch gekennzeichnet, dass** die Fase (14) und/oder der abgekantete Bereich an einer mit einem Flansch (10, 10'; 11, 11') versehenen Seitenwand (2, 2') vorgesehen ist.

10. Blumenkasten nach einem der vorhergehenden Ansprüche, **dadurch gekennzeichnet, dass** wenigstens eine der Seitenwände (3; 5) mit einer Versteifungsprofilierung (7; 8) versehen ist.

11. Blumenkasten nach Anspruch 10, **dadurch gekennzeichnet, dass** die Versteifungsprofilierung einen mit dem Boden verbundenen Steg (7) und/oder eine Griffmulde (8) aufweist.

12. Blumenkasten nach einem der vorhergehenden Ansprüche, **dadurch gekennzeichnet, dass** die Seitenwände (2'; 3; 4'; 5) alle im Wesentlichen die gleiche Länge aufweisen.

13. Blumenkasten nach einem der Ansprüche 1 bis 11, **dadurch gekennzeichnet, dass** die beiden mit einem Flansch (10, 10'; 11, 11') versehenen Seitenwände (2; 4) länger als die angrenzenden, nicht mit einem Flansch (10, 10'; 11, 11') versehenen Seitenwände (3; 5) sind.

14. Blumenkasten nach einem der vorhergehenden Ansprüche, **dadurch gekennzeichnet, dass** er ein einstückiges Kunststoff-Formteil ist.

## Claims

1. Planter for fastening in a free space (19) between base boards (17), top boards (16) and spacer blocks (18) of a pallet (15), having four side walls (2, 2'; 3; 4, 4'; 5) and a base (6), wherein two mutually opposite side walls (2, 2'; 4, 4'), on their side which is directed away from the base (6), each has an outwardly directed flange (10, 10'; 11, 11'), which extends at least essentially parallel to the base (6), **characterized in that** at least one flange (10, 10'; 11, 11') is provided with at least one slot-form through-passage opening (12), and **in that** at least one flange (10, 10'; 11, 11') is provided with at least one locking tongue (13), which is adapted to the slot-form through-passage opening (12), and **in that** one flange (10, 10'; 11, 11') rests on the base board (17), and one flange (10, 10'; 11, 11') rests on the top board (16), of the pallet (4) when the planter is fastened in the free space (19).

2. Planter according to Claim 1, **characterized in that** the at least one slot-form through-passage opening (12) extends parallel to the side wall (2, 2'; 4, 4') in the flange (10, 10'; 11, 11') of which the slot-form through-passage opening (12) is provided.

3. Planter according to Claim 1 or 2, **characterized in that** the at least one slot-form through-passage opening (12) is arranged essentially adjacent to the side wall (2, 2'; 4, 4') in the flange (10, 10'; 11, 11') of which the slot-form through-passage opening (12) is provided.

4. Planter according to one of the preceding claims, **characterized in that** the at least one locking tongue (13) extends parallel to the side wall (2, 2'; 4, 4') in the flange (10, 10'; 11, 11') of which the locking tongue (13) is provided.

5. Planter according to one of the preceding claims, **characterized in that** the at least one locking tongue (13) is arranged on the flange edge which is directed away from the side wall (2, 2'; 4, 4') in the flange (10, 10'; 11, 11') of which the locking tongue (13) is provided.

6. Planter according to one of the preceding claims, **characterized in that** at least one flange (10, 10'; 11, 11') is provided with a plurality of spaced-apart and aligned slot-form through-passage openings (12), and **in that** at least one flange (10, 10'; 11, 11') is provided with a plurality of spaced-apart and aligned locking tongues (13).

7. Planter according to one of the preceding claims, **characterized in that** at least two mutually opposite side walls (2, 2'; 3; 4, 4'; 5) run in an inclined state such that the interior of the planter tapers conically in the direction of the base (6) from the edge which is provided with the flange (10, 10'; 11, 11').

8. Planter, in particular according to one of the preceding claims, having four side walls and a base, **characterized in that** at least one side wall (2, 2') is connected to the base (6) via a chamfer (14) and/or a bevelled region.

9. Planter according to Claim 8, **characterized in that** the chamfer (14) and/or the bevelled region are/is provided on a side wall (2, 2') which is provided with a flange (10, 10'; 11, 11').

10. Planter according to one of the preceding claims, **characterized in that** at least one of the side walls (3; 5) is provided with a reinforcement profiling (7; 8).

11. Planter according to Claim 10, **characterized in that** the reinforcement profiling has a crosspiece (7), which is connected to the base, and/or a grip cavity (8).

12. Planter according to one of the preceding claims, **characterized in that** the side walls (2'; 3; 4'; 5) are all of essentially the same length.

13. Planter according to one of Claims 1 to 11, **characterized in that** the two side walls (2; 4) which are provided with a flange (10, 10'; 11, 11') are longer than the adjacent side walls (3; 5), which are not provided with a flange (10, 10'; 11, 11').

14. Planter according to one of the preceding claims, **characterized in that** it is a single-piece plastic moulding.

## Revendications

1. Jardinière destinée à être fixée dans un espace libre (19) entre des planches de fond (17), des planches de recouvrement (16) et les blocs d'espacement (18) d'une palette (15) et comprenant quatre parois latérales (2, 2' ; 3 ; 4, 4' ; 5) et un fond (6), deux parois latérales (2, 2' ; 4, 4') opposées l'une à l'autre comportant chacune sur leur côté opposé au fond (6) un rebord (10, 10' ; 11, 11') qui est dirigé vers l'extérieur et qui s'étend au moins sensiblement parallèlement au fond (6), **caractérisée en ce qu'**au moins un rebord (10, 10' ; 11, 11') est pourvu d'au moins une ouverture traversante (12) en forme de fente et **en ce qu'**au moins un rebord (10, 10' ; 11, 11') est pourvu d'au moins une languette de verrouillage (13) adaptée à l'ouverture traversante (12) en forme de fente et **en ce qu'**un rebord (10, 10' ; 11, 11') est en appui sur la planche de fond (17) et un rebord (10, 10' ; 11, 11') est en appui sur la planche de recouvrement (16) de la palette (4) lorsque la jardinière est fixée dans l'espace libre (19).

2. Jardinière selon la revendication 1, **caractérisée en ce que** l'au moins une ouverture traversante (12) en forme de fente s'étend parallèlement à la paroi latérale (2, 2' ; 4, 4'), dans le rebord (10, 10' ; 11, 11') de laquelle l'ouverture traversante (12) en forme de fente est prévue.

3. Jardinière selon la revendication 1 ou 2, **caractérisée en ce que** l'au moins une ouverture traversante (12) en forme de fente est disposée de manière sensiblement adjacente à la paroi latérale (2, 2' ; 4, 4'), dans le rebord (10, 10' ; 11, 11') de laquelle l'ouverture traversante (12) en forme de fente est prévue.

4. Jardinière selon l'une des revendications précédentes, **caractérisée en ce que** l'au moins une languette de verrouillage (13) s'étend parallèlement à la paroi latérale (2, 2' ; 4, 4'), dans le rebord (10, 10' ; 11, 11') de laquelle la languette de verrouillage (13) est prévue.

5. Jardinière selon l'une des revendications précédentes, **caractérisée en ce que** l'au moins une languette de verrouillage (13) est disposée au niveau du bord du rebord qui est opposé à la paroi latérale (2, 2' ; 4, 4'), dans le rebord (10, 10' ; 11, 11') de laquelle la languette de verrouillage (13) est prévue.

6. Jardinière selon l'une des revendications précédentes, **caractérisée en ce qu'au** moins un rebord (10, 10' ; 11, 11') est pourvu d'une pluralité d'ouvertures traversantes (12) en forme de fente qui sont espacées les unes des autres et qui sont alignées les unes avec les autres, et **en ce qu'**au moins un rebord (10, 10' ; 11, 11') est pourvu d'une pluralité de languettes de verrouillage (13) qui sont espacées les unes des autres et qui sont alignées les unes avec les autres.

7. Jardinière selon l'une des revendications précédentes, **caractérisée en ce qu'**au moins deux parois latérales (2, 2' ; 3 ; 4, 4' ; 5) opposées l'une à l'autre sont inclinées de telle sorte que l'espace intérieur de la jardinière s'amincit en forme de cône depuis le bord pourvu du rebord (10, 10' ; 11, 11') en direction du fond (6).

8. Jardinière, notamment selon l'une des revendications précédentes, comprenant quatre parois latérales et un fond, **caractérisée en ce qu'au** moins une paroi latérale (2, 2') est reliée au fond (6) par le biais d'un biseau (14) et/ou d'une zone biseautée.

9. Jardinière selon la revendication 8, **caractérisée en ce que** le biseau (14) et/ou la zone biseautée sont prévus au niveau d'une paroi latérale (2, 2') pourvue d'un rebord (10, 10' ; 11, 11').

10. Jardinière selon l'une des revendications précédentes, **caractérisée en ce que** l'une au moins des parois latérales (3 ; 5) est pourvue d'un profilé de renfort (7 ; 8).

11. Jardinière selon la revendication 10, **caractérisée en ce que** le profilé de renfort comporte une aile (7) reliée au fond et/ou une cavité de préhension (8).

12. Jardinière selon l'une des revendications précédentes, **caractérisée en ce que** les parois latérales (2' ; 3 ; 4' ; 5) ont toutes sensiblement la même longueur.

13. Jardinière selon l'une des revendications 1 à 11, **caractérisée en ce que** les deux parois latérales (2 ; 4) pourvues d'un rebord (10, 10' ; 11, 11') sont plus longues que les parois latérales (3 ; 5) adjacentes non pourvues d'un rebord (10, 10' ; 11, 11').

14. Jardinière selon l'une des revendications précédentes, **caractérisée en ce que** ladite jardinière est une pièce moulée d'une seule pièce en matière synthétique.
